# EUROPEAN PATENT SPECIFICATION

(11) **EP 3 601 989 B1**
(45) Date of publication and mention of the grant of the patent: **26.01.2022**
(21) Application number: 17903406.1
(22) Date of filing: 27.03.2017
(51) Int. Cl.: G01M 9/02, A63G 31/00, G10K 11/16, B64D 23/00

(54) **AN OPEN VERTICAL WIND TUNNEL**
OFFENER VERTIKALER WINDKANAL
TUNNEL AÉRODYNAMIQUE VERTICAL OUVERT

(43) Date of publication of application: 05.02.2020
(73) Proprietor: Aerodium Technologies, SIA, 1019 Riga (LV)
(72) Inventor: SVILPE, Arturs, 1009 Riga (LV); VOROBJOVS, Dmitrijs, 1067 Riga (LV); LUCKINSKIS, Sergejs, 2118 Riga (LV)
(74) Representative: Kromanis, Artis
(86) International application number: PCT/IB2017/051730
(87) International publication number: WO 2018/178739

(56) References cited:
- WO-A1-2007/008184
- CZ-A3- 20 032 747
- JP-A- H10 176 852
- JP-A- 2008 002 981
- SU-A1- 623 007
- US-A- 4 457 509
- US-A- 5 209 702
- US-A- 5 593 352
- US-A- 5 753 811
- US-A- 6 139 439

## Description

### Field of the Invention

Invention relates to an open vertical wind tunnels for simulating a free fall sky diving, especially to the assemblies in the vertical wind tunnels for straightening an air flow generated by rotation of a propeller about a vertical axis to provide air flow as straight as possible for enabling the simulation of free fall conditions and for attenuating a noise created by a propeller and wind flow.

### Background of the Invention

The prior art includes various open vertical wind tunnels. Great Britain patent application publication No. 2 290 484 discloses skydiving simulator consisting of a wheeled transportable trailer or vehicle of open box design containing; power unit, propeller, air correction vanes, air permeable trampoline walk net and with platform decking sections that unfold to form a horizontal floor immediately surrounding the vertical air column produced by the machine. United states patent publication No. 5,593,352 discloses a ground level skydiving simulator apparatus comprising a collapsible air containment unit for directing air upwardly there through to enable a user or users to be supported by the airstream in simulating skydiving activities. The air containment unit is provided on a movable platform, such as a flatbed trailer, with all or substantially all components of the apparatus being mounted thereon. Similar open vertical wind tunnels are also disclosed in European patent publication No. 1 937 381 and in Great Britain patent publication No. 2 288 772.

Regarding noise reduction solutions, the prior art includes various flow straightening and/or noise attenuating assemblies. United states patent publication No. 6,139,439 discloses a means for linearizing an open, vertically directed air flow, which includes a vertical cylindrical element mounted above a propeller and a plurality of radially oriented vertically planar guide vanes supported at their radially outside ends in such a manner that ambient air can flow radially inward below and above the propeller. Additionally, a second set of shorter radial guide vanes is provided in alternation with the vanes that are connected to the cylindrical element. Similar flow straightening assemblies are disclosed in the UK patent application publication No. 2 290 484 and UK patent publication No. 2 288 772.

Document US5209702A discloses an open vertical wind tunnel comprising a noise abatement shroud built completely around the propeller. This shroud has a perforated inner body, which directs some of the noise from the propeller into a baffling system, and allows the remaining noise to penetrate through the perforations into the centre of the shroud, which is filled with a sound absorbing material.This material absorbs most of the noise entering the shroud, and directs the remaining noise towards the baffling system to allow the noise from the propeller to be baffled, or, abated to a low level.

### Summary of the Invention

The aim of the invention is to design an open vertical wind tunnel with improved noise characteristics - lower noise levels without compromising flight performance or power of a fan assembly.

The aim is reached by designing an open vertical wind tunnel that comprises: a frame structure; a power unit with a fan assembly installed in said frame structure; a flow straightening assembly that in addition of straightening an air flow also absorbs noise generated by the power unit and the fan assembly; a flight platform disposed above the flow straightening assembly; and sound attenuating panels disposed around the vertical wind tunnel.

The frame structure is basically made of steel or any other metal columns and beams arranged in such a manner as to be able to receive the power unit and support the flow straightening assembly and other elements above thereof. At least some sections between columns and/or beams of the frame structure may be filled with a sound absorption material and said filled sections are covered by perforated metal plates. Said perforated metal plates provide noise reduction in a lower part of the vertical wind tunnel and enclosed sound absorption material provides further reduction of noise generated by the power unit and fan assembly.

The power unit is attached to the frame structure by means of adjustable brackets. The brackets are adjustable relative to the frame structure, therefore allowing levelling of the power unit within the frame structure and the vertical wind tunnel. Attachment points of the power unit may also be used as lifting points of the power unit to ease assembling/disassembling of the open vertical wind tunnel.

The power unit may be electrical motor or internal combustion engine depending on the use of the vertical wind tunnel. The fan assembly is attached to the driving shaft of the power unit via a hub. The fan assembly comprises a hub, a flywheel, blades and a blade fixation block. The flywheel and blade fixation block may be an integral part to which the blades are attached. The flywheel is used as a load bearing structural element for connecting the blades to the shaft of the power unit and as a safety internal mass for emergency when the vertical wind tunnel is suddenly shut down or turned off.

The flight platform comprises a safety cushion positioned above the flow straightening assembly. The flight platform may comprise additional safety elements such as vertical guard net disposed around the safety cushion. The vertical guard net encompasses the flight platform creating the so-called flight chamber. The vertical guard net may be inclined outwards of the vertical wind tunnel.

The flow straightening assembly comprises a vertical cylindrical housing and a central cone disposed within thereof and guide vanes disposed between the vertical cylindrical housing and the central cone.

The vertical cylindrical housing is mounted above and coaxially with the fan assembly of said vertical wind tunnel. A flight stage is located above said vertical cylindrical housing. The inner surface of the vertical cylindrical surface, which faces the central cone disposed within, may be inclined and perforated. Accordingly, the guide vanes have inclined side, which is to be attached to the inclined surface of the cylindrical housing. The perforated inner surface of the cylindrical housing works as a noise reducing element. Moreover, the hollow volume of the cylindrical housing may be filed with sound absorbing or attenuating material for further noise reduction.

The central cone is disposed within and coaxially with the vertical cylindrical housing. The central cone may be truncated cone. Moreover, the central cone may have perforated lateral surface to reduce a noise generated by the power unit and the fan assembly. The hollow volume of the central cone may be filed with sound absorbing material for further noise reduction.

The plurality of guide vanes is radially oriented and vertically disposed. The guide vane is attached to an inner surface of the vertical cylindrical housing and the lateral surface of the central cone. The guide vane comprises a curved leading section and a straight trailing section. Aim of the curved leading section is to straighten the air flow generated by the propeller, wherein an aim of the straight trailing section is further to straighten the air flow received from the curved leading section and reduce a noise generated by the fan assembly and the air flow. Both sections are integral parts of the guide vanes, in a result of which aero-dynamical losses are significantly reduced. The airflow runs smoothly from the curved leading section to the straight trailing section. The curved leading section comprises a leading edge that is also slightly curved so that said edge can receive a whirling airflow from a propeller of the fan assembly and guide it along the curved leading section further to the straight trailing section, in result of which the turbulent airflow from the propeller is straightened. The guide vane, especially at the curved leading section, is aerodynamically formed to be able to receive airflow from the propeller and straighten said airflow so that it is parallel to the straight trailing section of the guide vane.

The guide vane comprises a beam structure, which is covered by the perforated sheet metal. A shape of the perforations may be generally in a form of circle or ellipse. The skilled person may choose different form of perforations, for example a hexagon or any other shape. The diameter or extent of perforation hole depends on length of a sound wave generated by the power unit and/or the fan assembly. The leading edge may not be covered by the perforated sheet metal in order not to disturb an upcoming airflow from the propeller.

The guide vane is further equipped with the sound attenuating or absorbing material. The sound absorbing material may be disposed within all volume of the guide vane encompassed by the perforated sheet metal. In another embodiment, the sound absorbing material may be disposed only within the straight trailing section.

The guide vane may have variable cross section. The defined cross section of the guide vane is parallel to the straightened air flow. The cross section of the guide vane increases in the direction towards the central cone. The cross section of the guide vane near the vertical cylindrical housing may be smaller than the cross section of the guide vane near the central cone.

The sound attenuating panels are arranged around the vertical wind tunnel or flight platform. An inwards faced surface of each sound attenuating panel is covered with perforated metal plate. An outwards faced surface of each sound attenuating panel is covered with solid metal plate. An area between perforated metal plate and solid metal plate of the sound attenuating panel is filed with sound absorbing material. Use of both plates as well as the sound absorbing material allows the sound attenuating panel to be as a load bearing structure. The thickness and rate of perforations depends on the acoustic characteristics of the power unit and the fan assembly.

### Brief Description of the Drawings

Fig. 1 illustrates an open vertical wind tunnel.
Fig. 2 illustrates a frame structure **1** with installed electrical power unit **2**, a fan assembly **3** and a flow straightening assembly **4**.
Fig. 3 illustrates a frame structure **1**.
Fig. 4 illustrates a flow straightening assembly **4**.
Fig. 5 illustrates a cross section of a flow straightening assembly **4** and a flight platform **5**.
Fig. 6 illustrates a guide vane **44** in axonometric view.
Fig. 7 illustrates a guide vane **44** with indicated cross-sections.
Fig. 8 illustrates cross sections of the guide vane **44** (illustrated in **Fig. 7**) in the direction towards the central cone **43**.
Fig. 9 illustrates another embodiment of a guide vane **44** with a non-perforated section **47** of the guide vane **44**.
Fig. 10 illustrates a partly assembled fan assembly **3** with blades **33**.

### Detailed Description of the Invention

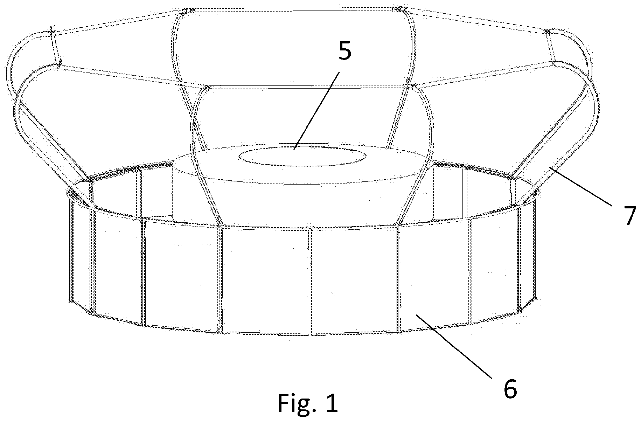

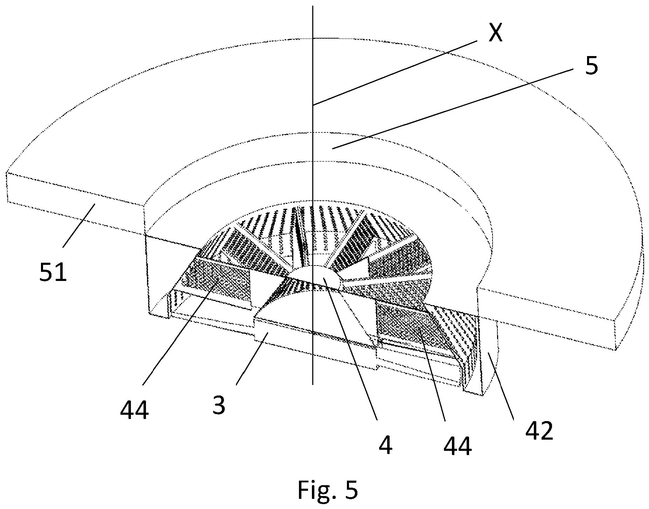

Fig. 1 illustrates partly assembled open vertical wind tunnel comprising a flight platform **5** including safety cushion 51 (see Fig. 5) and sound attenuating panels **6** positioned around the vertical wind tunnel. Due to sound attenuating panels **6**, other parts of the vertical wind tunnel are not visible for ordinary user. The vertical wind tunnel further comprises a safety guard comprising vertically arranged rods 7 and a net. The net is not shown for sake of clarity.

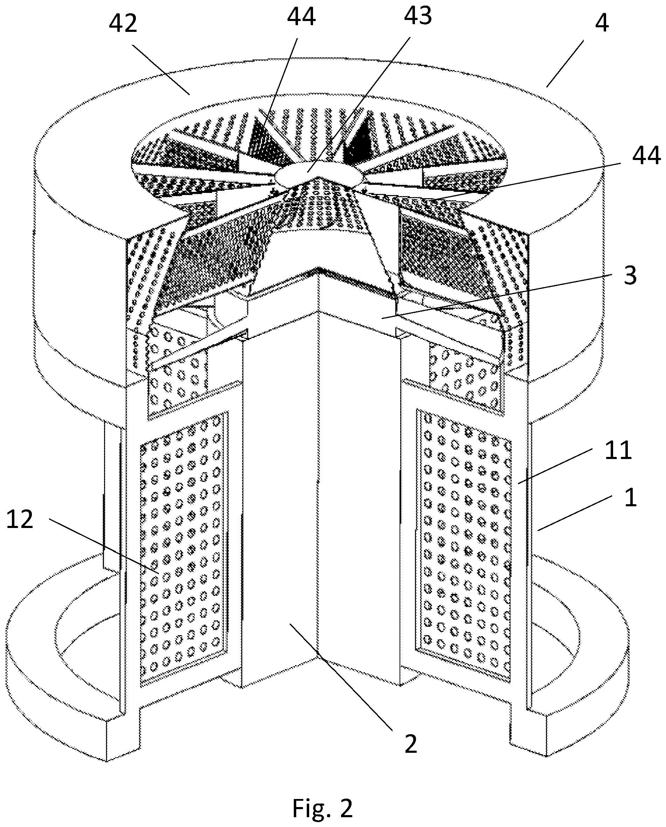

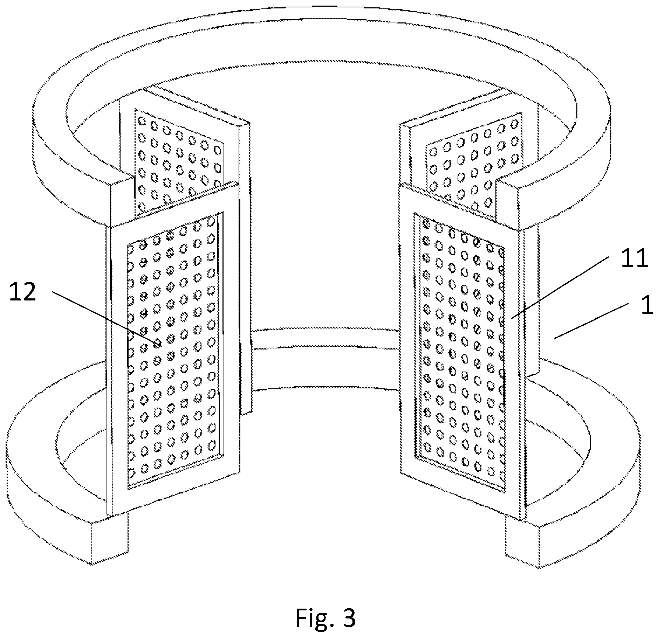

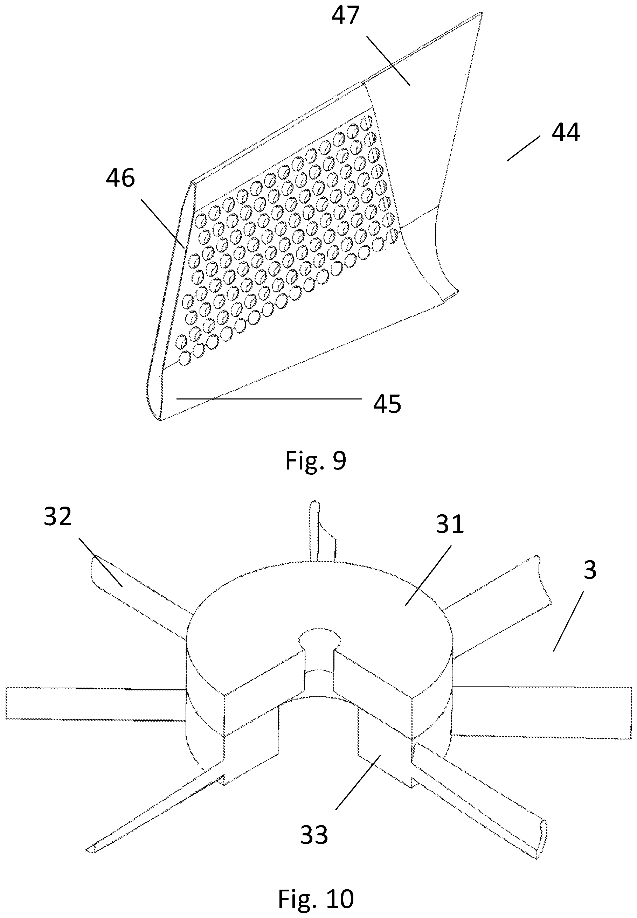

The open vertical wind tunnel further comprises a frame structure **1**; a power unit **2** installed in said frame structure **1**; a fan assembly **3** and a flow straightening assembly **4** (see Fig. 2). The frame structure **1** is composed of beams **11** (see Figs. 2 and 3), wherein a perforated metal plates **12** including sound absorbing material are mounted to facilitate a sound reduction. The volume encompassed by the beams **11** and perforated metal plates **12** are filed by sound absorbing material (not shown in Fig. 2 and 3). The fan assembly **3** is mounted on the driving shaft of the power unit **2**. The fan assembly **3** (see Fig. 10) comprises fan blades **32**, a flywheel **31**, which is configured as a load bearing structural element, a fan blade attachment unit **33** for connecting fan blades **32** to the fan assembly **3**.

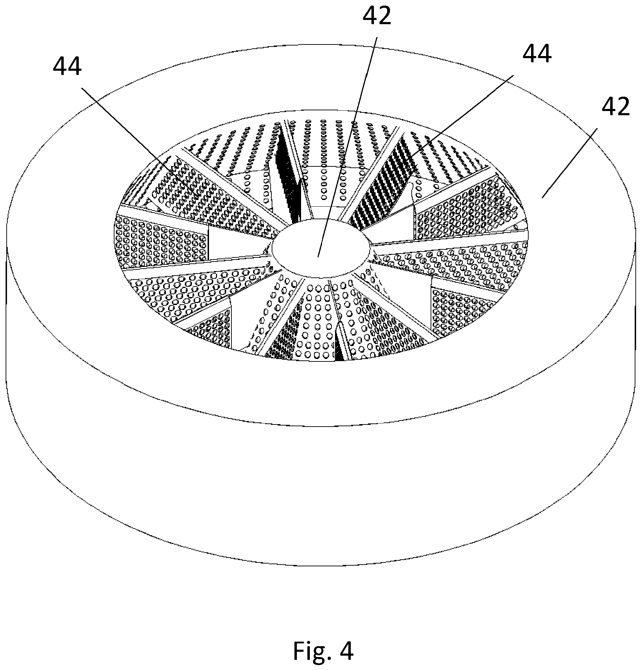

In Figs. 2, 4 and 5 the flow straightening assembly **4** comprises a vertical cylindrical housing **42** mounted above and coaxially with the fan assembly **3**, wherein a part of an inner surface of the vertical cylindrical housing **42** is inclined and perforated. The flow straightening assembly **4** further comprises a central cone **43** disposed within and coaxially with the vertical cylindrical housing **42**. A lateral surface of said central cone **43** is perforated. Moreover, the flow straightening assembly **4** further comprises a plurality of radially oriented vertically disposed guide vanes **44**, wherein each guide vane **44** is attached to an inner surface of the vertical cylindrical housing **42** and the central cone **43**. An inner section or a hollow volume of the cylindrical housing **42** and central cone **43** are filed with a sound absorbing material.

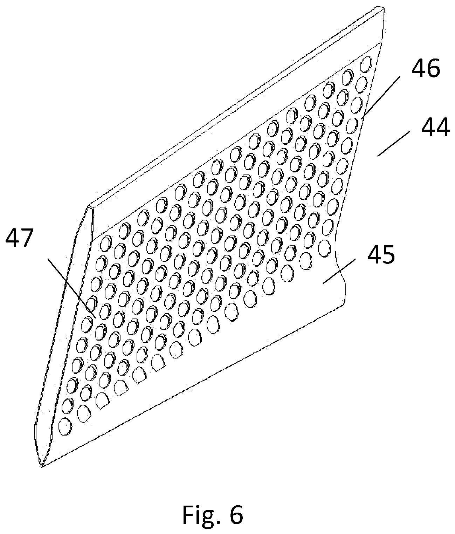

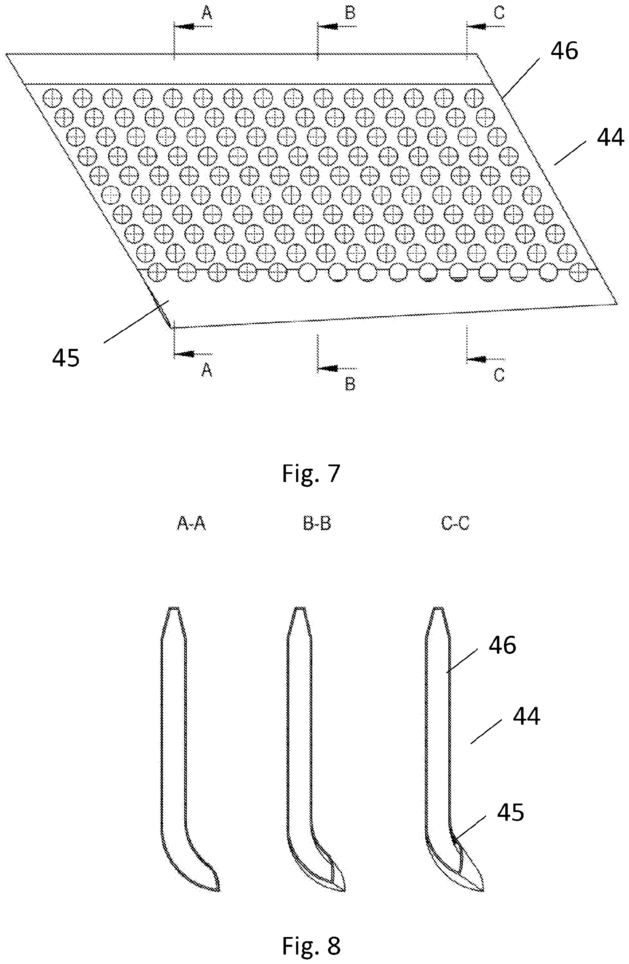

Figs. 6 to 9 illustrate guide vanes **44** in detail. The guide vane **44** comprises a curved leading section **45** and straight trailing section **46**. Both section **45** and **46** are integral parts of the guide vane **44**. The guide vane **44** from both of its sides is covered by a perforated metal sheet **47** forming perforated shell of the guide vane **44**. The curved leading section **45** is aerodynamically formed to be able to receive a whirling airflow generated by the fan assembly **3** and guide said airflow to the straight trailing section **46** straightening said airflow parallel with the central axis **X** of the flow straightening assembly **4** (see Fig.5).

The guide vane **44** may further comprise a section not covered by perforated metal sheet or non-perforated section **47** of the guide vane **44**. The non-perforated section **47** of the guide vane **44** is arranged on a side that is to be connected to the central cone **43**. The non-perforated section **47** has attachment points and reduced cross section to ease installation of the guide vane **44** to the central cone **43**.

While the invention has been described with reference to certain embodiments, it will be understood by those skilled in the art that various changes may be made and equivalents may be substituted .

Therefore, it is intended that the inventions not be limited to the particular embodiments disclosed herein. The scope of the invention is defined by the appended claims.

## Claims

1. An open vertical wind tunnel comprising:
- a frame structure (1), wherein at least some sections between beams (11) of the frame structure (1) are covered by perforated metal plates (12) and a hollow volume in the frame structure (1) enclosed by the perforated metal plates is filed with sound absorbing material;
- a power unit (2) attached to the frame structure (1);
- a fan assembly (3);
- a flow straightening assembly (4) comprising:
- a vertical cylindrical housing (42) mounted above and coaxially with the fan assembly (3), wherein a part of an inner surface of the vertical cylindrical housing (42) is inclined and perforated, and a hollow volume in the vertical cylindrical housing (42) is filled with sound absorbing material;
- a central cone (43) disposed within and coaxially with the vertical cylindrical housing (42), wherein a lateral surface of said central cone (43) is perforated and a hollow volume in said central cone (43) is filled with sound absorbing material; and
- a plurality of radially oriented vertically disposed guide vanes (44), wherein each guide vane (44) is attached to an inner surface of the vertical cylindrical housing (42) and the central cone (43); and
- a flight platform (5) comprising a safety net and safety cushion (51) there around.

2. The open vertical wind tunnel according to Claim 1, wherein the guide vane (44) comprises a curved leading section (45) and straight trailing section (46) as integral parts of the guide vane (44) and the guide vane (44) from both of its sides is covered by a perforated metal sheet (47) forming perforated shell of the guide vane (44), wherein a curved leading section (45) is aerodynamically formed to be able to receive a whirling airflow generated by the fan assembly (3) and guide said airflow to the straight trailing section (46) straightening said airflow parallel with the central axis (X) of the flow straightening assembly (4).

3. The open vertical wind tunnel according to Claim 2, wherein a hollow volume in the straight trailing section (46) encompassed by the perforated metal sheet (47) is filled with a sound absorbing material.

4. The open vertical wind tunnel according to Claim 3, wherein a hollow volume in the curved leading section (45) is filed with a sound absorbing material.

5. The open vertical wind tunnel according to Claim 2 or 3, wherein a cross section of the guide vane (44), which is parallel to the straightened air flow, increases along the guide vane (44) in a straight trailing edge section (46) in the direction towards the central cone (43).

6. The open vertical wind tunnel according to Claim 1, wherein the open vertical wind tunnel further comprises sound attenuating panels (6) arranged around the open vertical wind tunnel, wherein an inwards faced surface of each sound attenuating panel (6) is covered with perforated metal plate and an outwards faced surface of each sound attenuating panel (6) is covered with solid metal plate.

7. The open vertical wind tunnel according to Claim 6, wherein an area between perforated metal plate and solid metal plate of the sound attenuating panel (6) is filed with sound absorbing material.

8. The open vertical wind tunnel according to Claim 1, wherein the fan assembly (3) comprises a flywheel (31) which is configured as a load bearing structural element for connecting fan blades (32) to a drive shaft of the power unit (2).

## Patentansprüche

1. Ein offener vertikaler Windkanal, bestehend aus:
- einer Rahmenstruktur (1), wobei zumindest einige Abschnitte zwischen Trägern (11) der Rahmenstruktur (1) durch perforierte Metallplatten (12) abgedeckt sind und einem von den perforierten Metallplatten eingeschlossenen Hohlraum in der Rahmenstruktur (1), der mit schallabsorbierendem Material ausgefüllt ist;
- einer an der Rahmenstruktur (1) befestigten Antriebseinheit (2);
- einer Gebläseanordnung (3);
- einer Strömungsrichtvorrichtung (4), bestehend aus:
- einem vertikalen zylindrischen Gehäuse (42), das oberhalb und koaxial mit der Gebläseanordnung (3) angebracht ist, wobei ein Teil einer Innenfläche des vertikalen zylindrischen Gehäuses (42) geneigt und perforiert ist, sowie einem Hohlraum im vertikalen zylindrischen Gehäuse (42), der mit schallabsorbierendem Material gefüllt ist;
- einem zentralen Konus (43), der innerhalb und koaxial zum vertikalen zylindrischen Gehäuse (42) angeordnet ist, wobei eine Seitenfläche des zentralen Konus (43) perforiert ist und ein Hohlraum im zentralen Konus (43) mit schallabsorbierendem Material gefüllt ist; und
- einer Vielzahl von radial ausgerichteten, vertikal angeordneten Leitschaufeln (44), wobei jede Leitschaufel (44) an einer Innenfläche des vertikalen zylindrischen Gehäuses (42) und dem zentralen Konus (43) befestigt ist; sowie
- einer Flugplattform (5), die ein Sicherheitsnetz und ein Sicherheitskissen (51) um sie herum umfasst.

2. Offener vertikaler Windkanal nach Anspruch 1, wobei die Leitschaufel (44) einen gekrümmten vorderen Abschnitt (45) und einen geraden hinteren Abschnitt (46) als integrale Teile der Leitschaufel (44) umfasst und die Leitschaufel (44) von beiden Seiten durch ein perforiertes Metallblech (47) abgedeckt ist, das eine perforierte Hülle der Leitschaufel (44) bildet, wobei ein gekrümmter vorderer Abschnitt (45) aerodynamisch so geformt ist, dass er in der Lage ist, einen von der Gebläseanordnung (3) erzeugten wirbelnden Luftstrom aufzunehmen und diesen Luftstrom zum geraden hinteren Abschnitt (46) zu leiten, der diesen Luftstrom parallel zur Mittelachse (X) der Strömungsrichtvorrichtung (4) begradigt.

3. Offener vertikaler Windkanal nach Anspruch 2, wobei ein vom Lochblech (47) umschlossener Hohlraum im geraden hinteren Abschnitt (46) mit einem schallabsorbierenden Material gefüllt ist.

4. Offener vertikaler Windkanal nach Anspruch 3, wobei ein Hohlraum im gekrümmten Vorderteil (45) mit einem schallabsorbierenden Material ausgefüllt ist.

5. Offener vertikaler Windkanal nach Anspruch 2 oder 3, wobei ein Querschnitt der Leitschaufel (44), der parallel zu der gerichteten Luftströmung verläuft, entlang der Leitschaufel (44) in einem geraden hinteren Kantenabschnitt (46) in Richtung auf den zentralen Konus (43) zunimmt.

6. Offener vertikaler Windkanal nach Anspruch 1, wobei der offene vertikale Windkanal ferner schalldämpfende Platten (6) umfasst, die um den offenen vertikalen Windkanal herum angeordnet sind,
wobei eine nach innen gerichtete Oberfläche jeder schalldämpfenden Platte (6) mit perforiertem Metallblech und eine nach außen gerichtete Oberfläche jeder schalldämpfenden Platte (6) mit massivem Metallblech abgedeckt ist.

7. Offener vertikaler Windkanal nach Anspruch 6, wobei ein Bereich zwischen perforiertem Metallblech und massivem Metallblech der schalldämpfenden Platte (6) mit schallabsorbierendem Material ausgefüllt ist.

8. Offener vertikaler Windkanal nach Anspruch 1, wobei die Gebläsebaugruppe (3) ein Schwungrad (31) umfasst, das als lasttragendes Strukturelement zur Verbindung von Gebläseklingen (32) mit einer Antriebswelle der Antriebseinheit (2) konfiguriert ist.

## Revendications

1. Un tunnel aérodynamique vertical ouvert comprenant :
- une structure de cadre (1), au moins certaines sections entre des poutres (11) de la structure de cadre (1) étant recouvertes de plaques métalliques perforées (12) et un volume creux dans la structure de cadre (1) entouré par les plaques métalliques perforées étant rempli de matériau absorbant le son ;
- une unité d'alimentation (2) fixée à la structure de cadre (1) ;
- un ensemble ventilateur (3) ;
- un ensemble de redressement de flux (4) comprenant :
- un boîtier cylindrique vertical (42) monté au-dessus de et coaxialement à l'ensemble ventilateur (3), une partie d'une surface interne du logement cylindrique vertical (42) étant inclinée et perforée, et un volume creux dans le logement cylindrique vertical (42) étant rempli de matériau absorbant le son ;
- un cône central (43) disposé à l'intérieur du et coaxialement au logement cylindrique vertical (42), une surface latérale dudit cône central (43) étant perforée et un volume creux dans ledit cône central (43) étant rempli de matériau absorbant le son ; et
- une pluralité d'aubes de guidage (44) disposées verticalement et orientées radialement, chaque aube de guidage (44) étant fixée à une surface interne du logement cylindrique vertical (42) et du cône central (43) ; et
- une plate-forme de vol (5) comprenant un filet de sécurité et un coussin de sécurité (51) tout autour.

2. Le tunnel aérodynamique vertical ouvert selon la Revendication 1, l'aube de guidage (44) comprenant une section avant courbée (45) et une section arrière droite (46) faisant partie intégrante de l'aube de guidage (44) et l'aube de guidage (44) étant recouverte des deux côtés d'une tôle perforée (47) formant l'enveloppe perforée de l'aube de guidage (44), une section avant courbée (45) étant formée du point de vue aérodynamique pour pouvoir recevoir un flux d'air tourbillonnant généré par l'ensemble ventilateur (3) et guider ledit flux d'air vers la section arrière droite (46) redressant ledit flux d'air parallèlement à l'axe central (X) de l'ensemble de redressement de flux (4).

3. Le tunnel aérodynamique vertical ouvert selon la Revendication 2, un volume creux dans la section arrière droite (46) entouré de la tôle perforée (47) étant rempli d'un matériau absorbant le son.

4. Le tunnel aérodynamique vertical ouvert selon la Revendication 3, un volume creux dans la section avant courbée (45) étant rempli d'un matériau absorbant le son.

5. Le tunnel aérodynamique vertical ouvert selon la Revendication 2 ou 3, une section transversale de l'aube de guidage (44), qui est parallèle au flux d'air redressé, augmentant le long de l'aube de guidage (44) dans une section de bord avant droite (46) en direction du cône central (43).

6. Le tunnel aérodynamique vertical ouvert selon la Revendication 1, le tunnel aérodynamique vertical ouvert comprenant également des panneaux d'atténuation sonore (6) disposés autour du tunnel aérodynamique
vertical ouvert, une surface tournée vers l'intérieur de chaque panneau d'atténuation sonore (6) étant recouverte de plaque métallique perforée et une surface tournée vers l'extérieur de chaque panneau d'atténuation sonore (6) étant recouverte de plaque métallique pleine.

7. Le tunnel aérodynamique vertical ouvert selon la Revendication 6, une zone entre la plaque métallique perforée et la plaque métallique pleine du panneau d'atténuation sonore (6) étant remplie de matériau absorbant le son.

8. Le tunnel aérodynamique vertical ouvert selon la Revendication 1, l'ensemble ventilateur (3) comprenant un volant (31) configuré comme un élément structural porteur pour raccorder les pales de ventilateur (32) à un arbre d'entraînement de l'unité d'alimentation (2).
